# EUROPEAN PATENT SPECIFICATION

(11) **EP 4 400 542 B1**
(45) Date of publication and mention of the grant of the patent: **04.03.2026**
(21) Application number: 22867315.8
(22) Date of filing: 05.09.2022
(51) Int. Cl.: C08K 5/13, C08K 5/14, C08L 27/16

(54) **FLUORORUBBER COMPOSITION**
FLUORKAUTSCHUKZUSAMMENSETZUNG
COMPOSITION DE CAOUTCHOUC FLUORÉ

(30) Priority: 09.09.2021 JP 2021146644
(43) Date of publication of application: 17.07.2024
(73) Proprietor: NOK Corporation, Minato-ku Tokyo 105-8585 (JP)
(72) Inventor: FURUTACHI, Aki, Fujisawa-shi, Kanagawa 251-0042 (JP)
(74) Representative: Kraus & Lederer PartGmbB
(86) International application number: PCT/JP2022/033218
(87) International publication number: WO 2023/037993

(56) References cited:
- CN-A- 108 164 887
- CN-A- 110 105 624
- CN-A- 110 256 762
- JP-A- 2012 062 464
- JP-A- H0 966 570
- JP-A- H03 241
- US-A- 5 399 623

## Description

### TECHNICAL FIELD

The present invention relates to a fluororubber composition. More particularly, the present invention relates to a fluororubber composition that ensures stable product quality and can be vulcanized at a high speed.

### BACKGROUND ART

Fluororubber compositions have excellent oil resistance and fuel resistance, and are used as sealing molded materials, such as oil seals, O rings, and packings, in a wide range of fields, such as automotive and industrial machinery.

In recent years, from the viewpoint of CO₂ reduction requirements or cost reduction, the demand for short-time vulcanization is increasing, and fluororubber that can be vulcanized at a high speed has become the mainstream.

However, when vulcanization molding is completed in a short time, scorch is likely to occur due to the heating history in the processing process. Such scorch leads to deterioration of product quality.

From this background, there has recently been a demand for products with excellent scorch stability when using fluororubber that can be vulcanized at a high speed.

### PRIOR ART DOCUMENT

### PATENT DOCUMENT

Patent Document 1 : JP-A-6-16892
Patent Document 2 : JP-A-5-279535
Patent Document 3 : US-A-5 399 623

### OUTLINE OF THE INVENTION

### PROBLEM TO BE SOLVED BY THE INVENTION

An object of the present invention is to provide a fluororubber composition that can be vulcanized at a high speed and has excellent scorch stability.

### MEANS FOR SOLVING THE PROBLEM

The above object of the present invention can be achieved by a fluororubber composition comprising 0.1 to 1 parts by weight of a compound represented by the general formula: 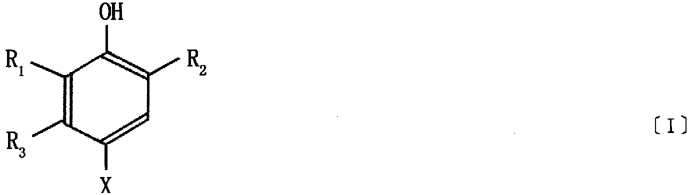 (wherein any two of R₁, R₂, and R₃ are lower alkyl groups having 1 to 5 carbon atoms, and the remaining one is hydrogen, and X is a methyl group or a hydroxyl group) and having a number average molecular weight Mn of 200 to 300, based on 100 parts by weight of peroxide-crosslinkable fluororubber.

### EFFECT OF THE INVENTION

The fluororubber composition according to the present invention exhibits excellent effects that it can vulcanized at a high speed and has excellent scorch stability.

### EMBODIMENTS FOR CARRYING OUT THE INVENTION

The fluororubber composition of the present invention comprises 0.1 to 1 parts by weight of a compound represented by the general formula: 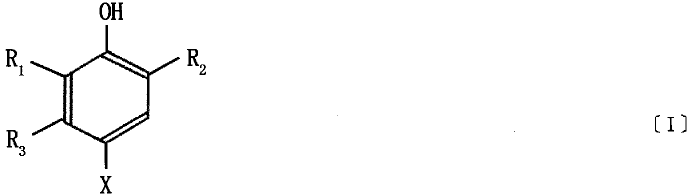 (wherein any two of R₁, R₂, and R₃ are lower alkyl groups having 1 to 5 carbon atoms, and the remaining one is hydrogen, and X is a methyl group or a hydroxyl group) based on 100 parts by weight of peroxide-crosslinkable fluororubber.

As the fluororubber, peroxide-crosslinkable fluororubber is used. A fluorine-containing olefin homopolymer or copolymer can be used for this fluororubber.

Examples of the fluorine-containing olefins include vinylidene fluoride, hexafluoropropylene, pentafluoropropylene, trifluoroethylene, trifluorochloroethylene, tetrafluoroethylene, vinyl fluoride, perfluoroacrylic acid ester, perfluoroalkyl acrylate, perfluoro methyl vinyl ether, perfluoro ethyl vinyl ether, perfluoro propyl vinyl ether, and the like.

The introduction of an iodine and/or bromine group enabling peroxide crosslinking of the fluororubber can be carried out by a copolymerization reaction in the presence of an iodine and/or bromine group-containing saturated or unsaturated compound.

When a bromine and/or iodine group is contained as a side chain of a fluorine-containing copolymer, examples of such copolymer include copolymer of a crosslinking site-forming monomer such as perfluoro(2-bromoethyl vinyl ether), 3,3,4,4-tetrafluoro-4-bromo-1-butene, 2-bromo-1,1-difluoroethylene, bromotrifluoroethylene, perfluoro(2-iodoethyl vinyl ether) and iodotrifluoroethylene.

When an iodine and/or bromine group is contained as a terminal group of a fluorine-containing copolymer, a fluoroalkylene compound halogenated at end represented by the general formula: X₁CₙF₂ₙX₂ (X₁: F, Br, or I; X₂: Br or I; and n: 1 to 12) is used. In terms of the balance of reactivity and handling, copolymer containing an iodine and/or bromine group, derived from 1-bromoperfluoroethane, 1-bromoperfluoropropane, 1-bromoperfluorobutane, 1-bromoperfluoropentane, 1-bromoperfluorohexane, 1-iodoperfluoroethane, 1-iodoperfluoropropane, 1-iodoperfluorobutane, 1-iodoperfluoropentane, and 1-iodoperfluorohexane, in which n is 1 to 6, are preferably used.

Moreover, when X₁ and X₂ are made I and/or Br, a crosslinking site can be introduced into the terminal position of a fluorine-containing copolymer. Examples of such a compound include 1-bromo-2-iodotetrafluoroethane, 1-bromo-3-iodoperfluoropropane, 1-bromo-4-iodoperfluorobutane, 2-bromo-3-iodoperfluorobutane, monobromomonoiodoperfluoropentane, monobromomonoiodoperfluoro-n-hexane, 1,2-dibromoperfluoroethane, 1,3-dibromoperfluoropropane, 1,4-dibromoperfluorobutane, 1,5-dibromoperfluoropentane, 1,6-dibromoperfluorohexane, 1,2-diiodoperfluoroethane, 1,3-diiodoperfluoropropane, 1,4-diiodoperfluorobutane, 1,5-diiodoperfluoropentane, 1,6-diiodoperfluorohexane, and the like. These compounds can also be used as a chain transfer agent.

These copolymers can be obtained by solution polymerization, suspension polymerization, or emulsion polymerization, and are also commercially available, e.g., P959, produced by Solvay, GBL-600S and GLT-600S produced by DuPont, and DAIEL-G801 and DAIEL-G901 produced by Daikin Industries, Ltd. , and the like.

The peroxide vulcanized fluororubber is compounded with, based on 100 parts by weight thereof, a compound represented by the general formula: 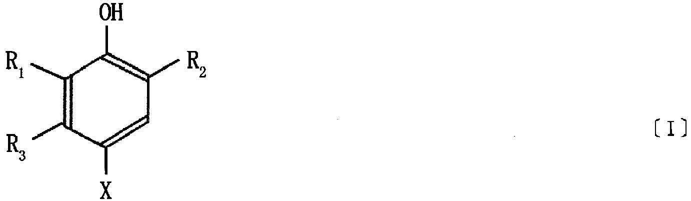 (wherein any two of R₁, R₂, and R₃ are lower alkyl groups having 1 to 5 carbon atoms, preferably a butyl group or an amyl group, more preferably a tert-butyl group or a tert-amyl group, and the remaining one is hydrogen, and X is a methyl group or a hydroxyl group) and having a number average molecular weight Mn of 200 to 300 at a ratio of 0.1 to 1 parts by weight, preferably 0.1 to 0.8 parts by weight. If the compound is used at a ratio less than this range, scorch stability cannot be achieved. In contrast, if the compound is used at a ratio greater than this range, the vulcanization time becomes longer.

Examples of such compounds include 2,6-di-tert-butyl-4-methylphenol having a number average molecular weight Mn of 220.35, 2,5-di-tert-butylhydroquinone having a number average molecular weight Mn of 222.33, 2,5-di-tert-amylhydroquinone having a number average molecular weight Mn of 250.38, and the like. Based on scorch T5 and rheometer t90 values, hydroquinone derivatives with a better balance of these values are preferably used.

Patent Document 1 discloses an example using 10 parts by weight of Nocrac NS-7 (2,5-di-tert-butylhydroquinone; number average molecular weight Mn: 222.33), produced by Ouchi Shinko Chemical Industrial Co., Ltd., as an antioxidant based on 100 parts by weight of a fluoropolymer; however, in such a mode, the vulcanization time becomes long, and the object of the present invention can hardly be achieved.

Further, Patent Document 2 discloses a fluorine-containing elastomer vulcanizable composition comprising a peroxide-vulcanizable fluorine-containing elastomer, organic peroxide, a polyfunctional co-crosslinking agent, and 0.1 to 10 parts by weight, preferably 0.2 to 5.0 parts by weight, of a phenol-based antioxidant containing 1 to 4 hydroxyphenyl groups with 1 or 2 tert-butyl groups per molecule, based on 100 parts by weight of fluororubber. Although many examples of antioxidants are given, the ones used in the present invention are not given. It is described that particularly preferred is tris(3,5-di-tert-butyl-4-hydroxybenzyl) isocyanurate having a molecular weight of 784.08.

Patent Document 3 discloses vulcanizable fluororubber composition comprising (a) an iodine- and/or bromine-containing fluororubber, (b) a vulcanizing agent which is an organic peroxide, and (c) a stabilizing agent such as m-t-butyl-p-hydroxyanisole, in an amount of 0.05 to 5 ppm based on the fluororubber (a).

In the fluororubber composition comprising the above essential components, it is possible to add compounding agents, including fillers or reinforcing agents, such as carbon black and silica; processing aids, such as wax, metal soap and carnauba wax; acid acceptors, such as calcium hydroxide, magnesium oxide, zinc oxide and hydrotalcite; anti-aging agents; thermoplastic resin; and coloring agents.

For the step of dispersing each compounding component in fluororubber, an open roll method, a closed kneading method, or a multi-screw extrusion kneading method can be used. Further, a kneader can also be used. In this case, kneading is carried out at about 100 to 200°C, preferably about 140 to 180°C.

The mixed materials are compounded with a crosslinking agent and subjected to crosslinking molding to produce a fluororubber crosslinked molded article. A peroxide crosslinking agent is used as the crosslinking agent.

Examples of the peroxide-based crosslinking agent include 2,5-dimethylhexane-2,5-dihydroperoxide, 2,5-dimethyl-2,5-di(benzoylperoxy)hexane, tert-butyl peroxide, dicumyl peroxide, tert-butyl cumyl peroxide, 1,1-di(tert-butylperoxy)-3,3,5-trimethylcyclohexane, 2,5-dimethyl-2,5-di(tert-butylperoxy)hexane, 2,5-dimethyl-2,5-di(tert-butylperoxy)hexyne-3, 1,3-di(tert-butylperoxyisopropyl)benzene, tert-butyl peroxybenzoate, tert-butylperoxy isopropylcarbonate, n-butyl-4,4-di(tert-butylperoxy)valerate, and the like. For them, commercially available products (such as Perhexa 25B-40 produced by NOF Corporation) can be used as they are. The peroxide-based crosslinking agent is used at a ratio of about 1 to 10 parts by weight based on 100 parts by weight of the fluororubber.

Further, as the peroxide cross-linking agent, a commercially available masterbatch containing a raw material rubber and a crosslinking agent may be used. These crosslinking agents may be used singly or in combination of two or more.

As the crosslinking accelerator (crosslinking aid) that can be used in the peroxide-based crosslinking system, triallyl isocyanurate, triallyl cyanurate, trimethylolpropane trimethacrylate or the like is used.

The fluororubber composition, which is a kneaded product of these components, is, for example, vulcanized under pressure and heating to form a crosslinked molded article. Specifically, the obtained fluororubber composition is heated generally at a temperature of about 150 to 200°C for about 3 to 300 minutes (primary vulcanization) using an injection molding machine, a compression molding machine, a vulcanizing press machine, an oven, or the like, thereby obtaining a fluororubber crosslinked molded article. Further, if necessary, secondary vulcanization is carried out, for example, by performing heat treatment in an oven in a temperature range of about 200 to 300°C for about 1 to 20 hours.

The obtained crosslinked molded article is effectively used, for example, as a seal member.

### EXAMPLES

The following describes the present invention with reference to Examples.

### Example 1

| | |
|---|---|
| Fluororubber (P959, produced by Solvay) | 100 parts by weight |
| MT carbon black (produced by Cancarb Limited) | 15 parts by weight |
| Iron oxide (BROWN#601 produced by Resino color industry Co., ltd.) | 35 parts by weight |
| Fatty acid ester-based compound (VPA#2 produced by DuPont) | 1.5 parts by weight |
| Triallyl isocyanurate (TAIC M-60, produced by Nippon Kasei Chemical Co., Ltd.) | 2 parts by weight |
| 2,5-dimethyl-2,5-bis(tert-butylperoxy)hexane (PERHEXA25B-40, produced by NOF Corporation) | 3 parts by weight |
| 2,6-di-tert-butyl-4-methylphenol (Nocrac 200, produced by Ouchi Shinko Chemical Industrial Co., Ltd.; number average molecular weight Mn: 220.35) | 0.2 parts by weight |

The above components were kneaded by a kneader and an open roll, and the kneaded product was vulcanized with a crosslinking press at 180°C for 4 minutes, thereby obtaining a crosslinked product.

Scorch T5 and rheometer t90 were measured using an uncrosslinked rubber sheet as a sample.

Scorch T5: The time (T5) for the torque to increase by 5M units at a temperature of 125°C was measured.
When T5 was 15 minutes or more, this case was evaluated as ○ because there was no concern about scorch, and when T5 was less than 15 minutes, this case was evaluated as ×.

Rheometer t90: According to JIS K6300 corresponding to ISO 289-1, a crosslinking curve for 10 minutes at a temperature of 180°C was measured, and the time t90 for the torque corresponding to reach 90% of the maximum torque value MH was determined.
When t90 was less than 4 minutes, this case was evaluated as ○ because the crosslinking time was sufficiently short and it was effective to reduce CO₂ and costs, and a t90 was 4 minutes or more, this case was evaluated as ×.

As a result, T5 was 25 (evaluated as ○), and t90 was 1.17 (evaluated as ○).

### Example 2

In Example 1, the amount of 2,6-di-tert-butyl-4-methylphenol was changed to 0.1 parts by weight. As a result, T5 was 18 (evaluated as ○), and t90 was 1.01 (evaluated as ○).

### Example 3

In Example 1, the amount of 2,6-di-tert-butyl-4-methylphenol was changed to 0.5 parts by weight. As a result, T5 was 40 or more (evaluated as ○), and t90 was 1.78 (evaluated as ○).

### Example 4

In Example 1, the amount of 2,6-di-tert-butyl-4-methylphenol was changed to 1 parts by weight. As a result, T5 was 40 or more (evaluated as ○), and t90 was 3.42 (evaluated as ○).

### Example 5

In Example 1, the same amount (0.2 parts by weight) of 2,5-di-tert-butylhydroquinone (Nocrac NS-7, produced by Ouchi Shinko Chemical Industrial Co., Ltd.; number average molecular weight Mn: 222.33) was used in place of 2,6-di-tert-butyl-4-methylphenol. As a result, T5 was 20 (evaluated as ○), and t90 was 1.50 (evaluated as ○).

### Example 6

In Example 1, the same amount (0.2 parts by weight) of 2,5-di-tert-amylhydroquinone (Nocrac DAH, produced by Ouchi Shinko Chemical Industrial Co., Ltd.; number average molecular weight Mn: 250.38) was used in place of 2,6-di-tert-butyl-4-methylphenol. As a result, T5 was 26 (evaluated as ○), and t90 was 1.58 (evaluated as ○).

### Comparative Example 1

In Example 1, the 2,6-di-tert-butyl-4-methylphenol was not used. As a result, T5 was 11 (evaluated as ×), and t90 was 0.83 (evaluated as ○).

### Comparative Example 2

In Example 1, the same amount (0.2 parts by weight) of 2,2-methylenebis (4-methyl-6-tert-butylphenol (Nocrac NS-6, produced by Ouchi Shinko Chemical Industrial Co., Ltd.; number average molecular weight Mn: 340.51) was used in place of 2,6-di-tert-butyl-4-methylphenol. As a result, T5 was 10 (evaluated as ×), and t90 was 1.40 (evaluated as ○).

### Comparative Example 3

In Example 1, the same amount (0.2 parts by weight) of tetrakis[methylene-3-(3',5'-di-tert-butyl-4-hydroxyphenyl)propionate]methane (ADK STAB AO-60, produced by ADEKA Corporation; number average molecular weight Mn: 1178) was used in place of 2,6-di-tert-butyl-4-methylphenol. As a result, T5 was 10 (evaluated as ×), and t90 was 1.03 (evaluated as ○).

### Comparative Example 4

In Example 1, the amount of 2,6-di-tert-butyl-4-methylphenol was changed to 1.3 parts by weight. As a result, T5 was 40 or more (evaluated as ○), and t90 was 4.33 (evaluated as ×).

## Claims

1. A fluororubber composition comprising 0.1 to 1 parts by weight of a compound represented by the general formula: 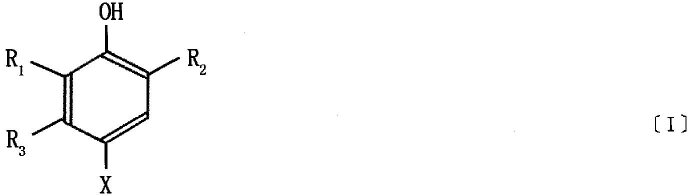 (wherein any two of R₁, R₂, and R₃ are lower alkyl groups having 1 to 5 carbon atoms, and the remaining one is hydrogen, and X is a methyl group or a hydroxyl group) and having a number average molecular weight Mn of 200 to 300, based on 100 parts by weight of peroxide-crosslinkable fluororubber.

2. The fluororubber composition according to claim 1, wherein lower alkyl groups having 1 to 5 carbon atoms is tert-butyl group or tert-amyl group.

3. The fluororubber composition according to claim 2, wherein compound represented by the general formula [I] is 2,6-di-tert-butyl-4-methylphenol.

4. The fluororubber composition according to claim 1, wherein compound represented by the general formula [I] is hydroquinone derivatives.

5. The fluororubber composition according to claim 4, wherein a hydroquinone derivatives is 2,5-di-tert-butylhydroquinone or 2,5-di-tert-amylhydroquinone.

6. The fluororubber composition according to claim 1, wherein a peroxide cross-linking agent is further added.

7. The crosslinked molded article, which is a crosslinked product of the fluororubber composition according to claim 6.

8. The crosslinked molded article according to claim 7, which is used as a sealing material.

## Patentansprüche

1. Fluorkautschukzusammensetzung, umfassend 0,1 bis 1 Gewichtsteil einer Verbindung, die durch die allgemeine Formel dargestellt wird: 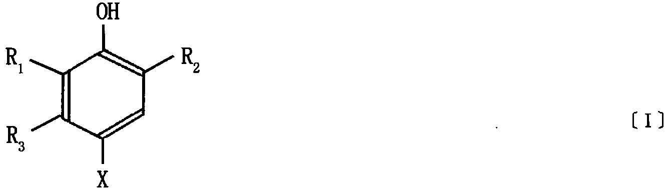 (wobei zwei beliebige der Gruppen R₁, R₂ und R₃ Niederalkylgruppen mit 1 bis 5 Kohlenstoffatomen sind und die verbleibende Gruppe Wasserstoff ist und X eine Methylgruppe oder eine Hydroxylgruppe ist) und mit einem zahlenmittleren Molekulargewicht Mn von 200 bis 300, bezogen auf 100 Gewichtsteile peroxidvernetzbaren Fluorkautschuk.

2. Fluorkautschukzusammensetzung gemäß Anspruch 1, wobei die Niederalkylgruppen mit 1 bis 5 Kohlenstoffatomen tert-Butylgruppen oder tert-Amylgruppen sind.

3. Fluorkautschukzusammensetzung nach Anspruch 2, wobei die durch die allgemeine Formel [I] dargestellte Verbindung 2,6-Di-tert-butyl-4-methylphenol ist.

4. Fluorkautschukzusammensetzung nach Anspruch 1, wobei die durch die allgemeine Formel [I] dargestellte Verbindung Hydrochinonderivate sind.

5. Fluorkautschukzusammensetzung nach Anspruch 4, wobei ein Hydrochinonderivat 2,5-Di-tert-butylhydrochinon oder 2,5-Di-tert-amylhydrochinon ist.

6. Fluorkautschukzusammensetzung nach Anspruch 1, wobei ein Peroxid-Vernetzungsmittel zusätzlich zugesetzt ist.

7. Vernetzter Formkörper, der ein vernetztes Produkt der Fluorkautschukzusammensetzung gemäß Anspruch 6 ist.

8. Vernetzter Formkörper gemäß Anspruch 7, der als Dichtungsmaterial verwendet wird.

## Revendications

1. Composition de caoutchouc fluoré comprenant 0,1 à 1 partie en poids d'un composé représenté par la formule générale : 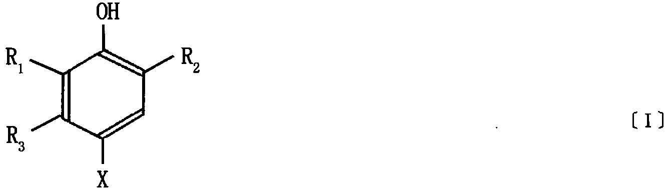 (dans laquelle deux quelconques parmi R₁, R₂ et R₃ sont des groupes alkyle inférieurs ayant 1 à 5 atomes de carbone, et le troisième est un atome d'hydrogène, et X est un groupe méthyle ou un groupe hydroxyle) et ayant un poids moléculaire moyen en nombre Mn de 200 à 300, sur la base de 100 parties en poids de caoutchouc fluoré réticulable au peroxyde.

2. Composition de caoutchouc fluoré selon la revendication 1, dans laquelle les groupes alkyle inférieurs ayant 1 à 5 atomes de carbone sont des groupes tert-butyle ou tert-amyle.

3. Composition de caoutchouc fluoré selon la revendication 2, dans laquelle le composé représenté par la formule générale [I] est le 2,6-di-tert-butyl-4-méthylphénol.

4. Composition de caoutchouc fluoré selon la revendication 1, dans laquelle le composé représenté par la formule générale [I] est des dérivés d'hydroquinone.

5. Composition de caoutchouc fluoré selon la revendication 4, dans laquelle un dérivé d'hydroquinone est le 2,5-di-tert-butylhydroquinone ou le 2,5-di-tert-amylhydroquinone.

6. Composition de caoutchouc fluoré selon la revendication 1, dans laquelle un agent de réticulation peroxyde est en outre ajouté.

7. Article moulé réticulé, qui est un produit réticulé de la composition de caoutchouc fluoré selon la revendication 6.

8. Article moulé réticulé selon la revendication 7, qui est utilisé comme matériau d'étanchéité.
